(19) Europäisches Patentamt
European Patent Office
Office européen des brevets

(11) **EP 3 107 033 A1**

(12) **EUROPEAN PATENT APPLICATION**

(43) Date of publication:
**21.12.2016 Bulletin 2016/51**

(51) Int Cl.:
***G06K 9/00*** *(2006.01)*

(21) Application number: **15465523.7**

(22) Date of filing: **15.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Continental Automotive GmbH
30165 Hannover (DE)**

(72) Inventor: **Pahontu, Nicolae
405100 Campia Turzii (RO)**

(74) Representative: **Büchner, Jörg et al
Conti Temic microelectronic GmbH
Sieboldstr. 19
90411 Nürnberg (DE)**

(54) **VEHICLE DIMENSIONS AND POSITION BROADCASTING FOR OPTICAL DISTANCE MEASUREMENTS**

(57) A method for estimating a distance from a present vehicle to a neighbouring vehicle. Broadcast data is received from the neighbouring vehicle and image data is received from a vehicle camera of the present vehicle. An image portion of the vehicle image is identified that corresponds to the visual feature of the neighbouring vehicle. A distance between the present vehicle and the neighbouring vehicle is estimated by correlating the received distance information with the identified image portion.

FIG. 1

**Description**

Vehicle-to-vehicle communications (V2V) is a promising technique for Advanced Driver Assistance Systems to increase traffic safety and efficiency. One of the functions of an Advanced Driver Assistant System (ADAS) is to warn the driver of the vehicle about dangerous situations involving other traffic participants. In particular, ADAS can be used to trigger actions of the present vehicle for avoiding dangerous situations, or for mitigating the impact of an inevitable collision. ADAS usually contains an environment perception subsystem that delivers positions and speed of other traffic participants in the closer environment of the ego vehicle. Further, an ADAS usually contains a subsystem for warning and/or generating action, which includes some kind of inference and decision making process.

The present specification relates to a distance estimation method and system for use in an advanced driver assistant system (ADAS). The distance estimation method is used for increasing the accuracy of measuring a distance between vehicles using mono camera sensors like ADAS Mono Camera Sensors, Surround View cameras etc. The distance estimation system makes use of broadcast data about the dimensions of a neighbouring vehicle.

The distance estimation method according to the present specification is applicable to vehicles situated in front in the back or on the lateral traffic lanes on highways. The vehicle in the front, the vehicle behind and the laterally adjacent vehicle are also referred to as the neighbouring vehicles. The vehicle that performs the distance measurement is also referred to as the present vehicle or the ego-vehicle.

The neighbouring vehicles are captured in image frames of vehicle cameras. The image data is combined with further information relating to the outer dimensions and the operating state of a neighbouring vehicle to derive a distance measurement.

In particular, a distance estimation method according to the present specification may comprise the following steps:

    1. Measuring the distance from the vehicle to the preceding vehicles.
    2. Measuring the distance from the vehicle to the following vehicles.
    3. Measuring the distance from the vehicle to the vehicles on the lateral lanes highways.
    4. Calculate a final velocity for the vehicles in a surround area based on tracking the distance in successive images captured at pre-determined moments in time.

In a distance measurement system according to the present specification, vehicles are provided with a sender device. The sender device broadcasts in periodic intervals the dimensions of the vehicle and its current position on the road. For example, the vehicle dimensions may comprise the distance between the two backlights, the distance between the front lights, the length of the vehicle, the height of the vehicle etc. The sending power, directionality and encoding method of the sender device is adjusted such that any vehicle situated in the vicinity within a pre-determined distance can receive the broadcast information.

The measurement system is designed such that a vehicle that receives the broadcast information can identify the vehicle, which has transmitted the broadcast data. For example, the broadcasted data may comprise identification information, for example an identification number such as the number on the number plate. Furthermore, the receiving vehicle may use information about the signal strength and the directionality of the signal to identify the source of the signal.

The receiving vehicle forwards the received information to an image processing unit. The image processing unit uses data from a camera a sensor, such as advanced driving assistance (ADAS) mono camera sensors, surround View Camera sensors etc., to measure the distances to the sending vehicles. The term "mono camera" is used to indicate that the vehicle camera is not a stereo camera, although a stereo camera may be used if available.

According to further embodiments, the broadcasted vehicle recognition data comprises further information such as the vehicle colour, information about the type, positioning, size and shape of the vehicle lights. For example, the information may indicate whether an additional brake light is present or not.

The vehicle recognition data is used to facilitate the recognition of the vehicle. The broadcasted information may also include the actual driving parameters such as the steering angle, the yaw, the turning rate, the driving speed, the braking deceleration, the braking intensity etc. With such information, the receiving vehicles in the vicinity are not only able to measure the distance to the sending vehicle but also to predict with high accuracy the future position of the vehicle.

The information is sent on public channels in a way that allows multiple vehicles in the same area of the road to send similar information without overlapping and corrupting the broadcasted information from others. Public channels include, among others, the dedicated short range communication (DSRC) channels that are allocated for road safety and traffic efficiency. DSRC is defined, among others in the European standards EN 12253:2004, EN 12795:2002, EN 12834:2002, EN 13372:2004 and EN ISO 14906:2004. Furthermore, the IEEE family of standards IEEE 1609 and the IEEE standard IEEE 802.11p, which is chosen in IEEE 1609 as protocol for the MAC and physical layer, are related to DSRC. According to IEEE 802.11p, a frequency band between 5.85 and 5.925 GHz is used.

For example, the sender devices may use a time division multiple access (TDMA) procedure. The sender devices may also use received broadcasted signals from other vehicle to adjust sending time slots in order to avoid data collisions. Alternatively or in addition, the time slots of the TDMA procedure may be chosen according to a random number or according to a pre-determined pattern of time intervals.

According to a further embodiment, the sender device uses a code division multiple access (CDMA) procedure. The orthogonal codes of the CDMA procedure may be chosen according to a random number, or they may be alternated according to a pre-determined sequence. Similar to the TDMA procedure, the vehicles may use the received information to choose a suitable CDMA code.

Further multiplexing procedures, which may be used for broadcasting vehicle related information, include frequency division multiple access (FDMA), orthogonal frequency division multiple access (OFDMA) and spatial division multiple access (SDMA). In particular, an OFDM procedure is defined in the 802.11p standard.

According to one scenario, all vehicles that are equipped with receivers are capable of receiving and decoding the information. In this scenario, all vehicles that send the information are situated in the visible area of camera sensors can be identified.

A method according to the present specification uses standard elements with known dimensions that belong to a vehicle in order to calculate with sufficient accuracy the distance to the object on the basis of image frames from an "intelligent" mono camera. An image processing unit, which is provided as part of the mono camera or which is connected to the mono camera, evaluates the dimension data of the observed vehicle and interprets the image data accordingly.

The method and the system according to the present specification are based on the following features:

- Vehicles that broadcast their dimensions, position, and optional additional information for vehicle identification and with actual moving parameters
- Vehicles that are equipped with receivers and camera sensors, which are able to decode and to use the information broadcasted by other vehicles for measuring distances
- a method to calculate the distances and the closing velocity
- a method to predict the future position of the vehicles that broadcast also their moving parameters.

The method takes into consideration that at a given distance from the mono camera, called D, the total number of pixels on the horizontal direction of the image (Nph) covers a horizontal distance d = 2 * D * tan (φ/2), wherein φ is the optical angle of the camera. This calculation is based on image data which is already corrected for lens distortions and/or in which the lens distortions can be neglected, such that the image can be effectively treated as an image of an idealized pinhole camera.

According to one embodiment, a preceding vehicle has visible markings that indicate the distance between the center of the two back light, for example 1.9 m. This dimension is referred to as VBLD (Vehicle Back Lights Distance).

In this case, at distance D, it can be calculated how many pixels will be in a captured image between the center of the two back lights of the vehicle. This number is referred to as NpVBLD(D), the number of Pixels that measure the VBLD at distance D.

$$\mathrm{NpVBLD(D)} = \mathrm{Nph} \times \frac{\mathrm{VBLD(m)}}{\mathrm{d(m)}} = \mathrm{Nph} \ \ \mathrm{x} \ \frac{\mathrm{VBLD(m)}}{2 \ \mathrm{x} \ \mathrm{D} \times \tan\left(\frac{\varphi}{2}\right)} \qquad (1)$$

In the captured image the number of pixels NpVBLD can be counted. Then the distance D is calculated as:

$$\mathrm{D} = \mathrm{Nph} \ \ \mathrm{x} \ \frac{\mathrm{VBLD(m)}}{2 \ \mathrm{x} \ \mathrm{NpVBLD(D)} \times \tan\left(\frac{\varphi}{2}\right)} \qquad (2)$$

Herein, m is a counter which numbers the neighbouring vehicles d(m) is the distance to the m-th vehicle and VBLD(m) is the backlight difference of the m-th vehicle.

Among others, the present specification discloses a computer implemented method for estimating a distance from a present vehicle to a neighbouring vehicle, which is equipped with a broadcasting unit for broadcasting vehicle related data. In particular, the neighbouring vehicle can be a vehicle driving ahead but also any other vehicle in the surroundings of the present vehicle.

The present vehicle receives broadcast data from the neighbouring vehicle over an antenna of the present vehicle. The broadcast data comprises distance data, which relates to a visual feature of the neighbouring vehicle, such as the lights, the bumper, the vehicle height etc. Furthermore, the broadcast data may comprise an identifier of the neighbouring vehicle. The distance data and the identifier are stored in a computer readable memory for further use.

Furthermore, the present vehicle receives image data from a vehicle camera of the present vehicle. The vehicle camera may be provided by a compact mono camera. The image data comprises a vehicle image of the neighbouring vehicle. The vehicle image can also refer to just a portion of the vehicle, as long as the portion comprises the visual feature.

The neighbouring vehicle is in the surroundings of the present vehicle and there is a line of sight between the present vehicle and the neighbouring vehicle at the time of capturing the image data of the neighbouring vehicle. At the time of broadcasting the data, the neighbouring vehicle may be obstructed from site as long as it is within a pre-determined broadcasting range.

An image portion of the vehicle image is identified that corresponds to the visual feature of the neighbouring vehicle by using an image recognition procedure. For example for recognizing the rear lights at daytime, the image recognition procedure can be based on an approximate size range of the rear lights and an approximate colour range. At night-time, the image recognition may use a brightness value and a colour range as input.

By way of example, a position of the visual feature may be tracked with a suitable tracking algorithm such as a Kalman filter or a Kanade-Lucas-Tomasi (KLT) feature tracker. Further motion data, which is broadcast from the neighbouring vehicle to the present vehicle, can be used as an input to the tracking algorithm. Furthermore, the directionality of the received broadcast signal can be used as an input to the tracking algorithm. Similarly, the image of the vehicle may be tracked with a suitable tracking algorithm in order to reduce the need for a computationally expensive feature detection process.

A vehicle distance from the present vehicle to the neighbouring vehicle, or from a sensor of a vehicle camera of the present vehicle to the neighbouring vehicle, is estimated by correlating the received distance information with the identified image portion.

According to a specific embodiment, a number of pixels is determined, which corresponds to an extension of the visual feature in a pre-determined direction on the sensor plane of the vehicle camera. In particular, the number of pixels may be determined by counting pixels between on a straight line between a first pixel and a second pixel, wherein the first pixel and the second pixel correspond to pre-determined locations of the identified image portion, such as an outer boundary, or to respective locations or centre points of image features etc.

A feature distance is extracted from the received broadcast data of the neighbouring vehicle, for example by reading out a corresponding data field. In particular, the feature distance is extracted or derived from the received distance data. The vehicle distance is derived from the distance data as a quotient, wherein a denominator of the quotient comprises the previously determined number of pixels and a numerator of the quotient comprises the feature distance, which has been received in a broadcast signal of the neighbouring vehicle.

According to one specific embodiment, the visual feature comprises a first rear light and a second rear light of the neighbouring vehicle, and the feature distance is a distance between the first rear light and the second rear light. In this case, the neighbouring vehicle is a vehicle driving ahead of the present vehicle. This embodiment is particularly useful for collision avoidance applications.

According to a further modification, a relative alignment of the neighbouring vehicle relative to the present vehicle is derived and it is determined whether the vehicles are aligned in parallel. If an orientation of the neighbouring vehicle is tilted or not parallel with respect to the present vehicle, a correction factor is computed from the derived relative alignment and the correction factor is used in the estimation of the distance. This could also mean discarding the vehicle distance estimate if the tilt angle is larger than a pre-determined value.

According to a further embodiment the broadcast information comprises motion data of the neighbouring vehicle such as data derived from a GPS system or another type of positioning system of the neighbouring vehicle and/or further data derived from vehicle motion sensors. Herein, motion data may comprises vehicle position and also vehicle motion state, such as velocity, yaw rate etc. A future position of the neighbouring vehicle is derived from the distance data and the motion data. In particular, this may comprise the use of a suitable tracking algorithm.

In a particular embodiment, a future position of an image portion that corresponds to the visual feature is derived based on the derived future position of the neighbouring car, for example, by deriving the future position of the car in a top down projection, applying an inverse of the top down projection and an inverse of a lens distortion function.

In a further embodiment, the motion data is derived from GPS data of a GPS system of the neighbouring vehicle, wherein GPS refers to any kind of satellite based positioning system, including Galileo and GLONASS, for example. The GPS system may also use other data such as broadcasted position information or information of vehicle sensors if satellite data is not available.

According to a further embodiment, the motion data comprises a steering angle, a steering wheel turning rate, a driving speed, a braking deceleration, a braking intensity or a combination thereof.

Furthermore, the current specification discloses a computer program product for executing the aforementioned method, which computer readable memory with computer readable instructions for executing the abovementioned method, such as a magnetic memory, a solid state memory, or an optic memory. Furthermore, the specification discloses a computing unit, such as a processor, an ASIC or another type of integrated circuit with the computer readable memory.

According to a further aspect, the present specification discloses a computing unit, which comprises a first connection for receiving broadcast data and a second connection for receiving image data. The first connection and the second connection may be identical, e.g. when both types of data are received via the CAN bus or another type of automotive data bus.

The computing unit is operative to receive broadcast data over the first connection, the broadcast data comprising distance data, which relates to a visual feature of a neighbouring or a sending vehicle. Furthermore, the computing unit is operative to receive image data over the second connection, wherein the image data comprises a vehicle image of the neighbouring vehicle. The vehicle image can also refer to just a portion of the vehicle, as long as the portion comprises the visual feature.

Furthermore, the computation unit is operative to identify an image portion of the vehicle image that corresponds to the visual feature of the neighbouring or sending vehicle and to estimate a distance between the present vehicle to the neighbouring vehicle, or a vehicle camera of the present vehicle to the neighbouring vehicle, by correlating the received distance information with the identified image portion.

In a further embodiment, the computing unit is operative to derive a future position of the neighbouring vehicle, or a position of the vehicle image or a position of an image of the visual feature.

According to a further embodiment, the computing unit is operative to broadcast distance data, which relates to a visual feature of a vehicle in which the computing unit is installed.

Moreover, the current specification discloses a vehicle with the aforementioned computing unit, which comprises a receiver antenna and a vehicle camera, wherein the receiver antenna is connected to the first connection the vehicle camera is connected to the second connection.

Furthermore, the current specification discloses a broadcasting unit, which is operative to read out distance data, that relates to a visual feature of a sending vehicle and to read out vehicle identification data of the sending vehicle, in particular to read out the data from a computer readable memory. Furthermore, the broadcasting unit is operative to transmit broadcast data at pre-determined times, for example in pre-determined intervals or periodically. The broadcast data comprises the distance information and the identifier.

In a further aspect, the current specification discloses a vehicle with the aforementioned broadcasting unit, wherein the vehicle is provided with an antenna and a signal output of the broadcasting unit is connected to the antenna.

The subject matter of the present application is now explained in further detail with respect to the following Figures in which

Figure 1    shows a distance estimation system according to the present specification,
Figure 2    shows a data frame of the distance estimation system,
Figure 3    shows a distance estimation method according to the present specification, and
Figure 4    shows a flow diagram of the distance estimation method.

In the following description, details are provided to describe the embodiments of the specification. It shall be apparent to one skilled in the art, however, that the embodiments may be practised without such details.

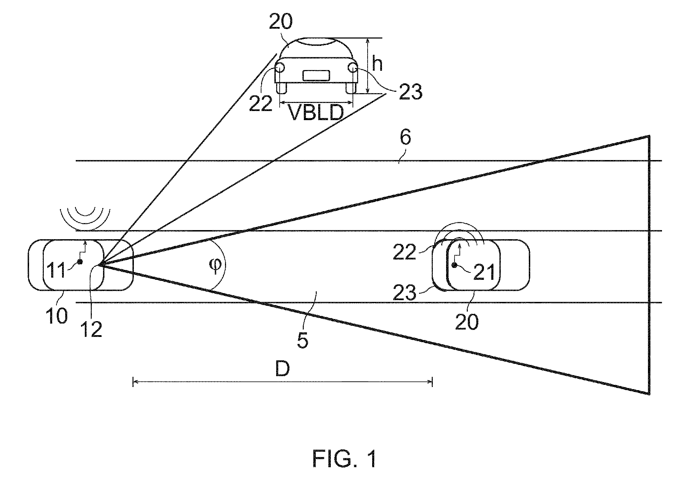

Fig. 1 shows an embodiment of a distance estimation system. A first vehicle 10 comprises an antenna 11, which is connected to a transceiver. Furthermore, the first vehicle 10 comprises a mono camera 12, which is directed towards a front area of the vehicle 10. The mono camera 12 has an angle of aperture φ. The mono camera 12 and the transceiver are connected to a processing unit of the vehicle 10, which is not shown in Fig. 1.

A second vehicle 20, which is driving in front of the first vehicle 10, comprises an antenna 21, which is connected to a transceiver. For illustration purposes, the second vehicle 20 is also shown in a rear view, as viewed from the camera 12.

In the example of Fig. 1, both vehicles 10, 20 are driving on a right lane 5, which is adjacent to a left lane 6. The vehicle has a height h and a back light distance VBLD. For example, the height h may be 1.5 m and the back light distance VBLD may be 1.9 m.

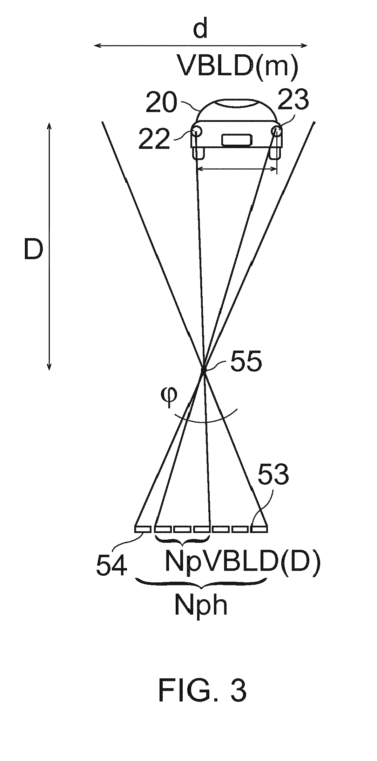

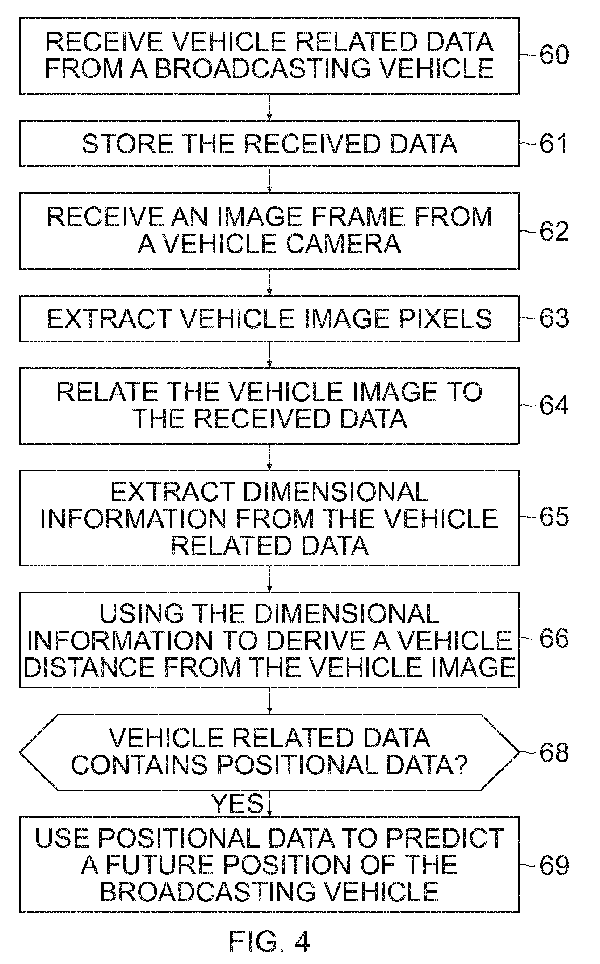

In the use case according to Fig. 1, the vehicle 20 in front transmits vehicle related data, which comprises in particular the back light distance VBLD, via the antenna 21 and the present vehicle 10 receives the vehicle related information via the antenna 11. The computation unit of the present vehicle uses the received data and the image data to provide an estimate of the distance D to the vehicle 20 ahead and to predict a future position of the vehicle 20. The distance estimation is explained in more detail with respect to the Figures 3 and 4.

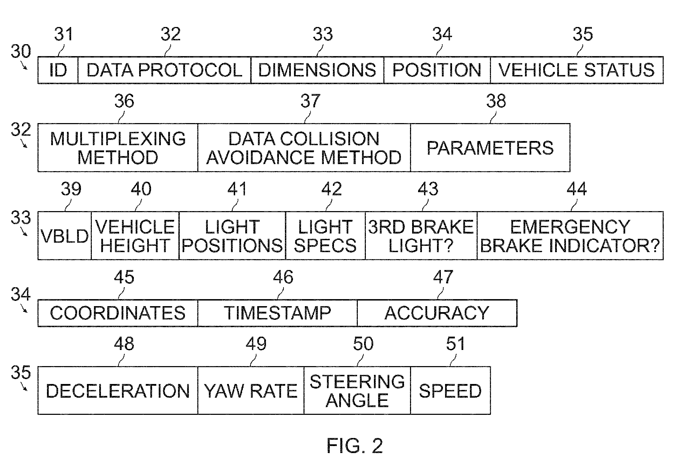

Fig. 2 shows an exemplary embodiment of a data frame 30 for use in the broadcasting of vehicle related information in the system of Fig. 1. The data structure is provided by way of example. In an actual implementation, the data structure may have different elements or it may have more or less elements. Some of the elements may also be optional and are only transmitted for vehicles with corresponding settings and capabilities. For example, the information about the presence of a third braking light may not be transmitted if the vehicle does not have a third braking light.

The data frame 30 comprises an identification field 31, a data protocol field 32, a vehicle dimensions field 33, a vehicle position field 34 and a vehicle status field 35.

The protocol field 32 is subdivided into a first field 36 specifying the multiplexing method, a second field 37 specifying a data collision avoidance method and a third field 38 specifying protocol parameters, such as an algorithm for alternating the code or time slots.

The dimension field 33 is subdivided into a first field 39 specifying the back light distance, a second field 41 specifying further light position data, a third field 42 specifying further specifications of the lights, such as dimensions and brightness, a fourth field 43 indicating whether a third brake light is present, and a fifth field 44 indicating whether a braking light has an emergency braking indication mode.

The positional data field 34 is subdivided into a coordinate field 45 specifying the vehicle coordinates, for example as longitude and latitude, a time stamp field 46 specifying a time of data capture or an expiry time of the data, and an accuracy field 47 which specifies an estimated data accuracy.

The vehicle status field 35 is subdivided into a first field 48 specifying a current deceleration, a second field 49 specifying a current yaw rate, a third field 50 specifying a current steering angle, and fourth field 51 specifying a current vehicle speed.

Fig. 3 illustrates a distance estimation method according to the current specification. A region between the rear lights of the car 20 ahead is projected onto a region of a sensor surface 53 of the mono camera 12 which comprises a number of NpVBLD(D) sensors 54, or sensor pixels 54, in a horizontal direction of a vehicle coordinate system. The sensor plane 53 comprises a total number of Nph sensors in the horizontal direction.

The distance between the vehicle 20 and the opening 55 of the equivalent pin-hole camera is denoted by D and the extension of the horizontal region which is captured by the aperture angle $\varphi$ of the camera 12 at distance D is denoted by d. A broadcast real distance between the rear lights 22, 23 of the vehicle 20 is denoted by VBLD(m).

With these definitions, the distance D of the vehicle can be computed according to the abovementioned formula (2).

Fig. 4 illustrate a method for estimate a distance between the present vehicle and a vehicle in the surroundings of the present vehicle 10, which is captured by one of the vehicle cameras of the present vehicle 10.

In a step 60, the present vehicle receives vehicle related data, such as the information contained in the data frame 30 of Fig. 2. The data frame 30 is derived from a signal of the antenna 11, for example by converting a quadrature amplitude modulated (QAM) signal into a digital signal and extracting the data frame from the digital signal.

In a step 61, the received data is stored in a computer readable memory of the present vehicle 10. In a step 62, an image frame, or a video sequence, is received from a vehicle camera 12 of the present vehicle.

In a step 63, an image processing unit identifies pixels which belong to a captured vehicle. In a step 64, the image processing unit relates the identified image pixels to the received vehicle data. For example, the image processing unit may correlate a received or estimated location of the vehicle with a direction that correspond to the identified the image pixels.

If the receiving antenna 11 is a directional antenna for which the directionality can be adjusted automatically, the estimated location of the sending vehicle can also be used to tune the receiving antenna 11 into the direction of a sending antenna of the sending vehicle.

In a step 65, dimensional information is extracted from the received vehicle related data, for example by extracting the data fields 39, 40 and 41 of Fig. 2. In a step 66, the dimensional information is used to derive a distance D to the sending vehicle from the identified image pixels. In particular, the distance estimation method according to formula (2) may be used, which was explained with reference to Fig. 3.

In a decision step 67, it is decided whether the vehicle related data comprises positional data, for example by checking for the presence of the data field 34 of Fig. 2.

If the vehicle data comprises positional data of the sending vehicle, the positional data of the sending vehicle is used in a step 68 to derive a future position of the sending vehicle. In particular, the predicted or derived future position can be used to predict an area of pixels in an image frame which corresponds to the sending vehicle. Furthermore, it can be used to predict a future position of vehicle features, such as the rear lights or the head light and the position of corresponding pixel areas of the camera sensor. The predicted pixel areas can be used to accelerate the image recognition.

Else the processing ends, further processing steps are performed which use further information of the vehicle data or the processing loops back to step 60. The further processing depends on various conditions, for example on whether a new image frame is available, or whether there is further vehicle data of the sending vehicle available.

The distance estimation of step 66 may also use further broadcast information as input, such as the position of a third braking light, the height of the car etc.

**Claims**

1. A method for estimating a distance from a present vehicle (10) to a neighbouring vehicle (20) comprising

   - receiving broadcast data (30) from the neighbouring vehicle (20), the broadcast data (30) comprising distance data, the distance data relating to a visual feature (22, 23) of the neighbouring vehicle (20),
   - receiving image data from a vehicle camera (12) of the present vehicle (10), the image data comprising a vehicle image of the neighbouring vehicle (10),
   - identifying an image portion of the vehicle image that corresponds to the visual feature (22, 23) of the neighbouring vehicle (20),
   - estimating a vehicle distance from the present vehicle (10) to the neighbouring vehicle (20) by correlating the received distance information with the identified image portion.

2. The method of claim 1, comprising
   determining a number of pixels (54), wherein the number of pixels (54) corresponds to an extension of the visual feature (22, 23) in a pre-determined direction, extracting a feature distance from the distance data, deriving the vehicle distance as a quotient, wherein a denominator of the quotient comprises the number of pixels (54) and a numerator of the quotient comprises the feature distance.

3. The method of claim 2, wherein the visual feature comprises (22, 23) a first rear light (22) and a second rear light (23) of the neighbouring vehicle (20), and wherein the feature distance is a distance between the first rear light (22) and the second rear light (23).

4. The method according to one of claims 1 to 3, comprising deriving a relative alignment of the neighbouring vehicle (20) relative to the present vehicle (10),
   if an orientation of the neighbouring vehicle (20) is tilted with respect to the present vehicle (10), computing a correction factor from the derived relative alignment,
   using the correction factor in the estimation of the distance.

5. The method according to one of the claims 1 to 4,
   wherein the broadcast data (30) comprises motion data of the neighbouring vehicle (20),
   deriving a future position of the neighbouring vehicle (20) from the distance data and the motion data.

6. The method according to claim 5, comprising deriving a future position of an image portion that corresponds to the visual feature (22, 23) based on the derived future position of the neighbouring car (20).

7. The method according to claim 5 or claim 6 wherein the motion data is derived from GPS data of a GPS system of the neighbouring vehicle (20).

8. The method according to one of the claims 5 to 7,
   wherein the motion data comprises a steering angle, a steering wheel turning rate, a driving speed, a braking deceleration, a braking intensity or a combination thereof.

9. A computer program product for executing a method according to one of the preceding claims.

10. A computing unit, the computing unit comprising
    a first connection for receiving broadcast data,
    a second connection for receiving image data,
    wherein the computing unit is operative to receive broadcast data over the first connection, the broadcast data comprising distance data, the distance data relating to a visual feature (22, 23) of a neighbouring vehicle (20),
    receive image data over the second connection, the image data comprising a vehicle image of the neighbouring vehicle (20),
    identify an image portion of the vehicle image that corresponds to the visual feature (22, 23) of the neighbouring vehicle (20),
    estimate a distance from a present vehicle (10) to the neighbouring vehicle (20) by correlating the received distance information with the identified image portion.

11. The computing unit according to claim 10, wherein the computing unit is operative to derive a future position of the neighbouring vehicle (20).

12. The computing unit according to claim 10 or 11, wherein the computing unit is operative to broadcast distance data, the distance data relating to a visual feature of a vehicle (10, 20) in which the computing unit is installed.

13. A vehicle (10) with a computing unit according to one of the claims 10 to 12, the vehicle comprising a receiver antenna (11) and a vehicle camera (12), wherein the receiver antenna (11) is connected to the first connection and the vehicle camera (12) is connected to the second connection.

14. A broadcasting unit, which is operative to read out a distance information, the distance information relating to a visual feature (22, 23) of a sending vehicle (20),
read out a vehicle identifier of the sending vehicle (20),
transmit broadcast data at pre-determined times, the broadcast data comprising the distance information and the identifier.

15. A vehicle (10) with the broadcasting unit according to claim 14, wherein the vehicle (10) is provided with an antenna (11), and wherein a signal output of the broadcasting unit is connected to the antenna (11).

FIG. 1

| | 31 | 32 | 33 | 34 | 35 |
|---|---|---|---|---|---|
| 30 | ID | DATA PROTOCOL | DIMENSIONS | POSITION | VEHICLE STATUS |

| | 36 | 37 | 38 |
|---|---|---|---|
| 32 | MULTIPLEXING METHOD | DATA COLLISION AVOIDANCE METHOD | PARAMETERS |

| | 39 | 40 | 41 | 42 | 43 | 44 |
|---|---|---|---|---|---|---|
| 33 | VBLD | VEHICLE HEIGHT | LIGHT POSITIONS | LIGHT SPECS | 3RD BRAKE LIGHT? | EMERGENCY BRAKE INDICATOR? |

| | 45 | 46 | 47 |
|---|---|---|---|
| 34 | COORDINATES | TIMESTAMP | ACCURACY |

| | 48 | 49 | 50 | 51 |
|---|---|---|---|---|
| 35 | DECELERATION | YAW RATE | STEERING ANGLE | SPEED |

FIG. 2

FIG. 3

```
┌─────────────────────────────────────────┐
│  RECEIVE VEHICLE RELATED DATA           │╶60
│  FROM A BROADCASTING VEHICLE            │
└─────────────────────────────────────────┘
                    ↓
┌─────────────────────────────────────────┐
│       STORE THE RECEIVED DATA           │╶61
└─────────────────────────────────────────┘
                    ↓
┌─────────────────────────────────────────┐
│  RECEIVE AN IMAGE FRAME FROM            │╶62
│       A VEHICLE CAMERA                   │
└─────────────────────────────────────────┘
                    ↓
┌─────────────────────────────────────────┐
│    EXTRACT VEHICLE IMAGE PIXELS         │╶63
└─────────────────────────────────────────┘
                    ↓
┌─────────────────────────────────────────┐
│  RELATE THE VEHICLE IMAGE TO            │╶64
│       THE RECEIVED DATA                  │
└─────────────────────────────────────────┘
                    ↓
┌─────────────────────────────────────────┐
│       EXTRACT DIMENSIONAL               │
│  INFORMATION FROM THE VEHICLE           │╶65
│           RELATED DATA                   │
└─────────────────────────────────────────┘
                    ↓
┌─────────────────────────────────────────┐
│     USING THE DIMENSIONAL               │
│  INFORMATION TO DERIVE A VEHICLE        │╶66
│  DISTANCE FROM THE VEHICLE IMAGE        │
└─────────────────────────────────────────┘
                    ↓
<      VEHICLE RELATED DATA               >╶68
<   CONTAINS POSITIONAL DATA?             >
                  YES↓
┌─────────────────────────────────────────┐
│  USE POSITIONAL DATA TO PREDICT         │
│    A FUTURE POSITION OF THE             │╶69
│       BROADCASTING VEHICLE              │
└─────────────────────────────────────────┘
```

FIG. 4

Europäisches
Patentamt

European
Patent Office

Office européen
des brevets

## EUROPEAN SEARCH REPORT

Application Number

EP 15 46 5523

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/240432 A1 (OSANAI SATOSHI [JP]) 24 September 2009 (2009-09-24) | 1-3,5-15 | INV. G06K9/00 |
| Y | * abstract * * page 1, paragraphs 11, 12 * * page 2, paragraphs 22, 24 * * page 3, paragraphs 29, 31, 38 * ----- | 4 | |
| X | US 2014/085428 A1 (STAEHLIN ULRICH [DE]) 27 March 2014 (2014-03-27) | 1,2,4 | |
| Y | * abstract * * page 1, paragraph 9 * * page 2, paragraph 22-23 * * page 3, paragraph 39 * * page 4, paragraph 41 * ----- | 4 | |

TECHNICAL FIELDS
SEARCHED      (IPC)

G06K

The present search report has been drawn up for all claims

| Place of search | Date of completion of the search | Examiner |
|---|---|---|
| The Hague | 26 October 2015 | Bouganis, Alexandros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 107 033 A1**

## ANNEX TO THE EUROPEAN SEARCH REPORT
## ON EUROPEAN PATENT APPLICATION NO.

EP 15 46 5523

26-10-2015

| Patent document cited in search report | | | Publication date | Patent family member(s) | | | Publication date |
|---|---|---|---|---|---|---|---|
| US 2009240432 | A1 | | 24-09-2009 | DE | 102009012917 | A1 | 24-09-2009 |
| | | | | JP | 4775391 | B2 | 21-09-2011 |
| | | | | JP | 2009223797 | A | 01-10-2009 |
| | | | | US | 2009240432 | A1 | 24-09-2009 |
| US 2014085428 | A1 | | 27-03-2014 | CN | 103597528 | A | 19-02-2014 |
| | | | | DE | 102011075674 | A1 | 15-11-2012 |
| | | | | EP | 2707862 | A1 | 19-03-2014 |
| | | | | KR | 20140038986 | A | 31-03-2014 |
| | | | | US | 2014085428 | A1 | 27-03-2014 |
| | | | | WO | 2012152746 | A1 | 15-11-2012 |

EPO FORM P0459

For more details about this annex : see Official Journal of the European Patent Office, No. 12/82